# EUROPEAN PATENT APPLICATION

(11) **EP 4 637 090 A1**
(43) Date of publication of application: **22.10.2025**
(21) Application number: 23902040.7
(22) Date of filing: 07.06.2023
(51) Int. Cl.: H04L 27/00

(54) **CONSECUTIVE MULTI-SLOT RESOURCE SELECTION METHOD AND APPARATUS**

(30) Priority: 15.12.2022 WO PCT/CN2022/139385
(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 10085 (CN)
(74) Representative: Stöckeler, Ferdinand
(86) International application number: PCT/CN2023/099009
(87) International publication number: WO 2024/124828

(57) **Abstract**

The present disclosure belongs to the technical field of communications. Provided are a consecutive multi-slot resource selection method and apparatus, and a device and a storage medium. The method comprises: a terminal device determining m transport blocks (TBs) that reach a physical layer of the terminal device, wherein m is a positive integer greater than 1; and selecting, for the m TBs, resources which are consecutive in terms of time domain, and respectively sending the m TBs on the selected resources which are consecutive in terms of time domain, wherein at the time of selecting resources for any TB among the m TBs, a resource selection result of another TB for which resource selection has been executed before the TB is taken into consideration, and the resource selection result is a resource that has been selected and not used for actual transmission. By means of the method, resources which are consecutive in terms of time domain can be determined for M TBs, thereby implementing consecutive multi-slot resource selection, reducing the impact of LBT failure, and improving the channel access efficiency

## Description

This disclosure claims priority to PCT International Application No. PCT/CN2022/139385, filed on December 15, 2022, and titled with "CONSECUTIVE MULTI-SLOT RESOURCE SELECTION METHOD AND APPARATUS", the entire contents of which are incorporated herein by reference.

### TECHNICAL FIELD

The disclosure relates to the field of communication technology, and in particular to a method, an apparatus, a device and a storage medium for continuous multi-slot resource selection.

### BACKGROUND

In communication systems, in unlicensed frequency bands, i.e. shared frequency bands, listen before talk (LBT) is required. However, the result of LBT is uncertain. If LBT fails, data cannot be transmitted on selected resources. Therefore, in order to reduce the impact of failure, after one successful LBT, it is possible to support the transmission of Transport Blocks (TBs) in multiple continuous slots, such as repeated transmission of multiple identical TBs in multiple continuous slots or transmission of multiple different TBs in multiple continuous slots. This can reduce the impact of LBT failure and improve channel access efficiency. However, how to choose resources with multiple continuous slots has become an urgent problem to be solved.

### SUMMARY

The present disclosure proposes a method, an apparatus, a device, and a storage medium for continuous multi-slot resource selection. Based on m TBs arriving at the physical layer of the terminal, the method selects time domain continuous resources for the m TBs, and respectively transmits the m TBs on the selected time domain continuous resources, wherein, for selecting resources for any TB of the m TBs, a resource selection result of another TB that has been performed with resource selection before the TB is considered, wherein the resource selection result includes resources selected but not used for actual transmission, thereby achieving continuous multi-slot resource selection, reducing the impact of LBT failure, and improving channel access efficiency.

Embodiments of an aspect of the present disclosure provide a method for continuous multi-slot resource selection, applied to sidelink communication on a shared frequency band. The method is performed by a terminal, and includes:
determining m transport blocks (TBs) that reach a physical layer of the terminal, where m is a positive integer greater than 1; selecting time domain continuous resources for the m TBs, and respectively transmitting the m TBs on the selected time domain continuous resources, wherein, for selecting resources for any TB of the m TBs, a resource selection result of another TB that has been performed with resource selection before the TB is considered, wherein the resource selection result includes resources selected but not used for actual transmission.

Embodiments of another aspect of the present disclosure provide an apparatus for continuous multi-slot resource selection, applied to sidelink communication on a shared frequency band. The apparatus is arranged on a terminal side and includes:
a determining module, configured to determine m transport blocks (TBs) that reach a physical layer of the terminal, where m is a positive integer greater than 1;
a selecting module, configured to select time domain continuous resources for the m TBs, and respectively transmit the m TBs on the selected time domain continuous resources, wherein, for selecting resources for any TB of the m TBs, a resource selection result of another TB that has been performed with resource selection before the TB is considered, wherein the resource selection result includes resources selected but not used for actual transmission.

Embodiments of yet another aspect of the present disclosure provide a terminal. The device includes a processor and a memory. The memory stores a computer program, which, when executed by the processor, cause the device to implement the method as described in embodiments of the first aspect of the present disclosure.

Embodiments of yet another aspect of the present disclosure provide a communication device, including a processor and an interface circuit;
wherein the interface circuit is configured to receive code instructions and transmit the code instructions to the processor; and
the processor is configured to execute the code instructions to implement the method proposed in embodiments of the first aspect of the present disclosure.

Embodiments of yet another aspect of the present disclosure provide a computer-readable storage medium, configured to store instructions, wherein when the instructions are executed, the method proposed in embodiments of the first aspect of the present disclosure is implemented.

In summary, in embodiments of the present disclosure, the terminal determines m TBs reaching the physical layer of the terminal, where m is a positive integer greater than 1; selects time domain continuous resources for the m TBs, and respectively transmits the m TBs on the selected time domain continuous resources. When selecting resources for any TB of the m TBs, a resource selection result of another TB that has been performed with resource selection before the TB is considered, and the resource selection result includes resources selected but not used for actual transmission. In embodiments of the present disclosure, a continuous multi-slot resource selection mechanism is provided to reduce the situation where selection of multiple time domain continuous resources cannot be made, which can improve the convenience of selecting resources in multiple continuous slots. This disclosure provides a processing method for a situation of "continuous multi-slot resource selection". Based on m TBs arriving at the physical layer of the terminal, when selecting resources for any TB in the m TBs, resources selected but not used for actual transmission of another TB that has been performed with resource selection before the TB are considered, so that resources that are continuous in the time domain can be determined for them TBs, thereby achieving continuous multi-slot resource selection, reducing the impact of LBT failure, and improving channel access efficiency.

### BRIEF DESCRIPTION OF THE DRAWINGS

The above and/or additional aspects and advantages of this disclosure will become apparent and easy to understand from the following description of embodiments in conjunction with the accompanying drawings.
Fig. 1 is a schematic diagram illustrating a method for continuous multi-slot resource selection provided in an embodiment of the disclosure.
Fig. 2 is a schematic flowchart of a method for continuous multi-slot resource selection provided in an embodiment of the disclosure.
Fig. 3 is a schematic diagram illustrating a method for continuous multi-slot resource selection provided in an embodiment of the disclosure.
Fig. 4 is a schematic diagram illustrating a method for continuous multi-slot resource selection provided in an embodiment of the disclosure.
Fig. 5 is a schematic flowchart of a method for continuous multi-slot resource selection provided in an embodiment of the disclosure.
Fig. 6 is a schematic diagram illustrating a method for continuous multi-slot resource selection provided in an embodiment of the disclosure.
Fig. 7 is a schematic diagram illustrating a method for continuous multi-slot resource selection provided in an embodiment of the disclosure.
Fig. 8 is a schematic flowchart of a method for continuous multi-slot resource selection provided in another embodiment of the disclosure.
Fig. 9 is a schematic flowchart of a method for continuous multi-slot resource selection provided in another embodiment of the disclosure.
Fig. 10 is a schematic flowchart of a method for continuous multi-slot resource selection provided in another embodiment of the disclosure.
Fig. 11 is a block diagram of an apparatus for continuous multi-slot resource selection provided in an embodiment of the disclosure.
Fig. 12 is a block diagram of a terminal provided in an embodiment of the present disclosure.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements, unless otherwise indicated. The implementations described in the following exemplary embodiments do not represent all implementations consistent with the embodiments of the disclosure. Rather, they are merely examples of devices and methods consistent with some aspects of the disclosure as recited in the appended claims.

Terms used in the disclosure are for the purpose of describing specific embodiments only, and are not intended to limit the disclosure. As used in the disclosure and the appended claims, the singular forms "a/an", "said" and "the" are also intended to include the plural forms, unless the context clearly dictates otherwise. It should also be understood that the term "and/or" as used herein refers to and includes any and all possible combinations of one or more of the associated listed items.

It should be understood that although the disclosure may use the terms first, second, third, etc. to describe various information, the information should not be limited to these terms. These terms are only used to distinguish information of the same type from one another. For example, without departing from the scope of the disclosure, first information may also be called second information, and similarly, second information may also be called first information. Depending on the context, the word "if" as used herein may be interpreted as "in a case that" or "when" or "in response to a determination".

The network element or network function involved in embodiments of the present disclosure can be implemented as an independent hardware device or through software in the hardware device, which is not limited in embodiments of the present disclosure.

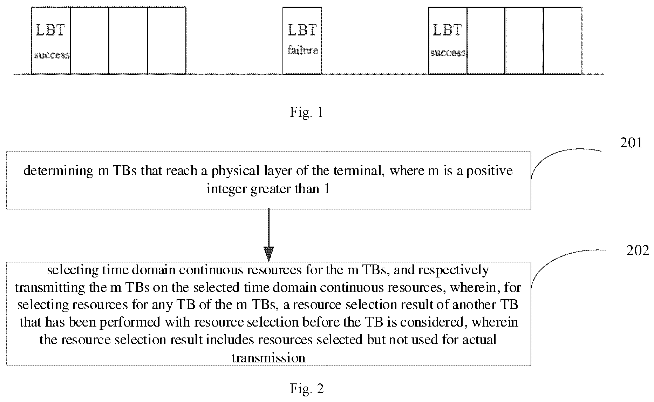

Fig. 1 is a schematic diagram of a method for continuous multi-slot resource selection provided in an embodiment of the present disclosure. As shown in Fig. 1, in unlicensed frequency bands, in order to reduce the impact of listen before talk (LBT) failure, it is possible to support the transmission of TBs in multiple continuous slots after one successful LBT. The transmission of multiple continuous slots can support the transmission of multiple TBs in continuous slots. The continuous transmission of multiple TBs can be transmission of multiple different TBs from the same user equipment (UE), or repeated transmissions of the same TB from the same UE, or transmission of multiple TBs of the same TB and different TBs. To achieve continuous multi-slot transmission, it is necessary to select continuous multi-slot resources.

The following provides a detailed description of a method, an apparatus, a device and a storage medium for continuous multi-slot resource selection provided in embodiments of the present disclosure with reference to the accompanying drawings.

Fig. 2 is a schematic flowchart of a method for continuous multi-slot resource selection provided in an embodiment of the present disclosure. The method is performed by a terminal. As shown in Fig. 2, the method may include the following steps.

Step 201, m TBs reaching a physical layer of the terminal are determined, where m is a positive integer greater than 1.

Step 202, time domain continuous resources are selected for the m TBs, and the m TBs are transmitted respectively on the selected time domain continuous resources, wherein, for selecting resources for any TB of the m TBs, a resource selection result of another TB that has been performed with resource selection before the TB is considered, wherein the resource selection result includes resources selected but not used for actual transmission.

In embodiments of the present disclosure, in unlicensed frequency bands, continuous multi-slot transmission can be supported, that is, transmission of multiple continuous TBs of the terminal in multiple continuous slots can be supported. The transmission of multiple continuous TBs of the terminal in multiple continuous slots includes initial transmission and/or retransmission of the multiple continuous TBs in multiple continuous slots. The disclosed technical solution can be applied to sidelink communication on shared frequency bands.

In embodiments of the present disclosure, in a case that the terminal determines m TBs that reach the physical layer of the terminal, the terminal can select time domain continuous resources for the m TBs, and transmits the m TBs respectively on the selected time domain continuous resources.

For selecting resources for the m TBs, a resource selection result of another TB that has been performed with resource selection before any TB of the m TBs is considered, wherein the resource selection result includes resources selected but not used for actual transmission.

In some embodiments, the other TB that has been performed with resource selection before the TB may be a TB that arrived before the TB and has been performed with resource selection, or may be a TB that arrived at the same time as the TB and has been performed with resource selection, or may be a TB that arrived after the TB and has been performed with resource selection, and so on.

In some embodiments, the resources selected but not used for actual transmission include initial transmission resources selected but not used for actual transmission, and/or re-transmission resources selected but not used for actual transmission.

In embodiments of the present disclosure, when for selecting time domain continuous resources for the m TBs, the terminal considers resources selected but not used for actual transmission of another TB that has been performed with resource selection before any TB of the m TBs, the terminal can consider initial transmission resources selected but not used for actual transmission of another TB that has been performed with resource selection before any TB of the m TBs, and/or re-transmission resources selected but not used for actual transmission of another TB that has been performed with resource selection before any TB of the m TBs.

In some embodiments, in a case that the terminal determines m TBs that reach the physical layer of the terminal, the terminal selects time domain continuous resources for the m TBs, and each resource selected for each TB is a resource in a single slot.

For example, the terminal selects time domain continuous resources for the 4 TBs that have reached the physical layer of the terminal, such as slot 1 for the first TB, slot 2 for the second TB, slot 3 for the third TB, and slot 4 for the fourth TB.

For example, the terminal selects time domain continuous initial transmission resources and re-transmission resources for the 4 TBs that have reached the physical layer of the terminal, such as selecting slot1 for the initial transmission of the first TB, slot2 for the initial transmission of the second TB, slot3 for the initial transmission of the third TB, slot4 for the initial transmission of the fourth TB, and such as selecting slot5 for the retransmission of the first TB, slot6 for the retransmission of the second TB, slot7 for the retransmission of the third TB, and slot8 for the retransmission of the fourth TB.

In some embodiments, an order from a first TB to an m^{th} TB is an order in which the TBs reaches the physical layer.

In some embodiments, a length of the time domain continuous slots selected for the m TBs is less than or equal to a threshold N, and the threshold N is related to a priority of a TB or related to a slot length of a longest channel occupancy time (COT).

In some embodiments, the threshold N is equal to the slot length of the longest COT.

In some embodiments, a time interval between any two resources selected for the same TB is greater than or equal to a minimum time interval Z.

In embodiments of the present disclosure, any two resources selected for the same TB can be the initial transmission resource and the retransmission resource, and the time interval between the initial transmission and retransmission of TB is greater than or equal to the minimum time interval Z.

In some embodiments, the method for continuous multi-slot resource selection provided in embodiments of the present disclosure is performed by a high layer of the terminal, and the higher layer is a layer other than the physical layer and above the physical layer.

In some embodiments, selecting by the terminal time domain continuous resources for the m TBs includes: for selecting resources for any TB of the m TBs, obtaining a candidate resource set corresponding to the TB from the physical layer; if there is no resource selected but not used for actual transmission for the other TB that has been performed with resource selection before the TB, selecting resources for the TB randomly from the candidate resource set corresponding to the TB; if there are resources selected but not used for actual transmission for the other TB that has been performed with resource selection before the TB, determining the resources as reference resources, and selecting resources for the TB based on the reference resources.

In an embodiment of the present disclosure, when the terminal selects time domain continuous resources for the m TBs, for selecting resources for any TB of the m TBs, the terminal can obtain the candidate resource set corresponding to the TB for the physical layer.

In some embodiments, obtaining the candidate resource set corresponding to the TB from the physical layer can obtain idle resources as the candidate resource set corresponding to the TB, or the method of obtaining the candidate resource set corresponding to the TB from the physical layer can adopt the methods in the related art, which will not be repeated here.

In an embodiment of the present disclosure, if there is no resource selected but not used for actual transmission for the other TB that has been performed with resource selection before the TB, resources for the TB are selected randomly from the candidate resource set corresponding to the TB; and if there are resources selected but not used for actual transmission for the other TB that has been performed with resource selection before the TB, the resources are determined as reference resources, and resources for the TB are selected based on the reference resources.

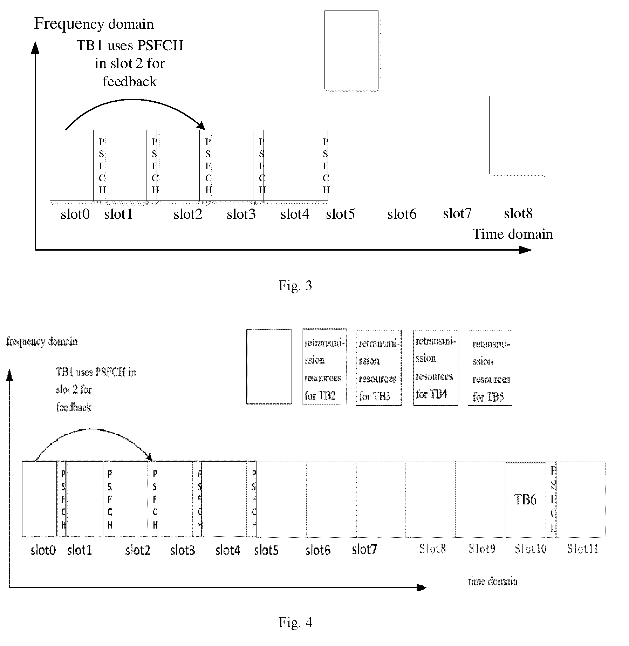

For example, as shown in Fig. 3, for TB1, TB2, TB3, TB4, and TB5, initial transmission resources and retransmission resources were selected, and initial transmission resources located consecutively in slot 0, slot 1, slot 2, slot 3, and slot 4 in the time domain were selected. Assuming that the minimum time interval required between the initial transmission resources and retransmission resources is 4 slots, the first retransmission resource located in slot 5 was selected for TB1. At this time, when the UE selects initial transmission resources and retransmission resources for TB6, it needs to consider the resource selection results of TB1, TB2, TB3, TB4, and TB5 that have already been performed with resource selection. The initial transmission resource and retransmission resources selected for TB6 cannot be located in the same time slots as the resources selected for TB1, TB2, TB3, TB4, and TB5. Therefore, as shown in Fig. 3, the initial transmission resource located in slot 8 was selected for TB6.

Based on this, in some embodiments, certain resources selected for the other TB that has been performed with resource selection before the TB, and resources located in same slots with the certain resources are excluded from the candidate resource set corresponding to the TB.

In some embodiments, in the candidate resource set corresponding to the TB, any resource located in the same slot with a certain resource selected for the other TB that has been performed with resource selection before the TB is not selected.

In an embodiment of the present disclosure, certain resources selected for the other TB that has been performed with resource selection before the TB, and resources located in same slots with the certain resources are excluded from the candidate resource set corresponding to the TB, or in the candidate resource set corresponding to the TB, any resource located in the same slot with a certain resource selected for the other TB that has been performed with resource selection before the TB is not selected. Therefore, it is possible to avoid any TB selecting resources from the candidate resource set while selecting specific resources already selected by other TBs that have previously performed resource selection, and to avoid any TB selecting resources from the candidate resource set that are located in the same time slot as the specific resources already selected by other TBs that have previously performed resource selection. It can avoid resource conflicts and avoids transmitting two TBs simultaneously in one slot, avoiding violating the existing rule in the sidelink system that one UE can only send one TB in one slot.

In an embodiment of the present disclosure, if the terminal selects resources for the TB in the candidate resource set corresponding to the TB, it may not select resources located in the same slots as the certain resources selected for other TBs that have been performed with resource selection before the TB in the candidate resource set corresponding to the TB.

In some embodiments, the certain resources include initial transmission resources and/or re-transmission resources.

In an embodiment of the present disclosure, initial transmission resources and/or re-transmission resources selected for the other TB that has been performed with resource selection before the TB, and initial transmission resources and/or re-transmission resources located in same slots with the certain resources are excluded from the candidate resource set corresponding to the TB.

In an embodiment of the present disclosure, the terminal may not select initial transmission resources and/or re-transmission resources located in the same slots as the initial transmission resources and/or re-transmission resources selected for other TBs that have been performed with resource selection before the TB in the candidate resource set corresponding to the TB.

In some embodiments, selecting resources by the terminal for the TB from the candidate resource set of the TB includes: selecting initial transmission resources and/or re-transmission resources for the TB from the candidate resource set of the TB.

In an embodiment of the present disclosure, when the terminal selects resources for the TB from the candidate resource set of the TB, the terminal may select initial transmission resources and/or re-transmission resources for the TB from the candidate resource set of the TB.

For example, as shown in Fig. 4, TB1, TB2, TB3, TB4, TB5, and TB6 arrive at the physical layer successively. The higher layer selects time domain continuous resources for TB1, TB2, TB3, TB4, and TB5, and they are located in slot0, slot1, slot2, slot3, and slot4, respectively. According to the requirement of meeting the minimum time interval between initial transmission and retransmission, and the minimum time interval is 4 time slots, then the resource located in slot 5 is selected for retransmission of TB1, the resource located in slot 6 is selected for retransmission of TB2, the resource located in slot 7 is selected for retransmission of TB3, the resource located in slot 8 is selected for retransmission of TB4, and the resource located in slot 9 is selected for retransmission of TB5, and then when selecting resources for TB6, resources located in the same time slots as slot 5, slot 6, slot 7, slot 8, and slot 9 that have already been selected for TB1, TB2, TB3, TB4, and TB5 are not selected in the candidate resource set corresponding to TB6, i.e., resources located in slot 5, slot 6, slot 7, slot 8, or slot 9 cannot be selected for TB6, and slot 10 can be selected for TB6, and resource located in slot 14 can be selected for retransmission of TB6.

In some embodiments, selecting resources by the terminal for the TB based on the reference resources includes: determining whether there is any resource in the candidate resource set of the TB that is located in a slot adjacent to the reference resource; if there is a resource located in a slot adjacent to the reference resource, selecting the resources located in the slots adjacent to the reference resources for the TB; and if there is no resource located in a slot adjacent to the reference resource, selecting resources for the TB randomly from the candidate resource set of the TB.

In an embodiment of the present disclosure, when the terminal selects resources for the TB based on the reference resources, the terminal may determine whether there is any resource in the candidate resource set of the TB that is located in a slot adjacent to the reference resource; select the resources located in the slots adjacent to the reference resources for the TB if there is a resource located in a slot adjacent to the reference resource; and select resources for the TB randomly from the candidate resource set of the TB if there is no resource located in a slot adjacent to the reference resource.

In some embodiments, if there are resources selected but not used for actual transmission for the other TB that has been performed with resource selection before the TB, determining the resources by the terminal as reference resources, includes: in a case that the TB is transmitted periodically, selecting the resources selected but not used for actual transmission for another TB, that has been performed with resource selection and has the same period as the TB or an integer multiple period of the TB, as the reference resources.

In an embodiment of the present disclosure, in a case that the TB is transmitted periodically, the terminal may select the resources selected but not used for actual transmission for another TB, that has been performed with resource selection and has the same period as the TB or an integer multiple period of the TB, as the reference resources.

In some embodiments, if there is a resource located in a slot adjacent to the reference resources, selecting the resources located in the slots adjacent to the reference resources for the TB, includes: if there are multiple resources in the candidate resource set of the TB that are located in slots adjacent to the reference resources, preferentially selecting resources that can form longer continuous slots with the reference resources as the resources for the TB; or if there are multiple resources in the candidate resource set of the TB that are located in slots adjacent to the reference resources, preferentially selecting resources ranked earlier in a time domain in the candidate resource set of the TB as the resources for the TB.

In an embodiment of the present disclosure, if there is a resource located in a slot adjacent to the reference resources, the terminal selects the resources located in the slots adjacent to the reference resources for the TB. If there are multiple resources in the candidate resource set of the TB that are located in slots adjacent to the reference resources, the terminal may preferentially select resources that can form longer continuous slots with the reference resources as the resources for the TB; or if there are multiple resources in the candidate resource set of the TB that are located in slots adjacent to the reference resources, the terminal may preferentially select resources ranked earlier in a time domain in the candidate resource set of the TB as the resources for the TB.

By implementing embodiments of the present disclosure, the terminal determines m TBs reaching the physical layer of the terminal, where m is a positive integer greater than 1; selects time domain continuous resources for the m TBs, and respectively transmits the m TBs on the selected time domain continuous resources. When selecting resources for any TB of the m TBs, a resource selection result of another TB that has been performed with resource selection before the TB is considered, and the resource selection result includes resources selected but not used for actual transmission. In embodiments of the present disclosure, a continuous multi-slot resource selection mechanism is provided to reduce the situation where selection of multiple time domain continuous resources cannot be made, which can improve the convenience of selecting resources in multiple continuous slots. This disclosure provides a processing method for a situation of "continuous multi-slot resource selection". Based on m TBs arriving at the physical layer of the terminal, when selecting resources for any TB in the m TBs, resources selected but not used for actual transmission of another TB that has been performed with resource selection before the TB are considered, so that resources that are continuous in the time domain can be determined for them TBs, thereby achieving continuous multi-slot resource selection, reducing the impact of LBT failure, and improving channel access efficiency.

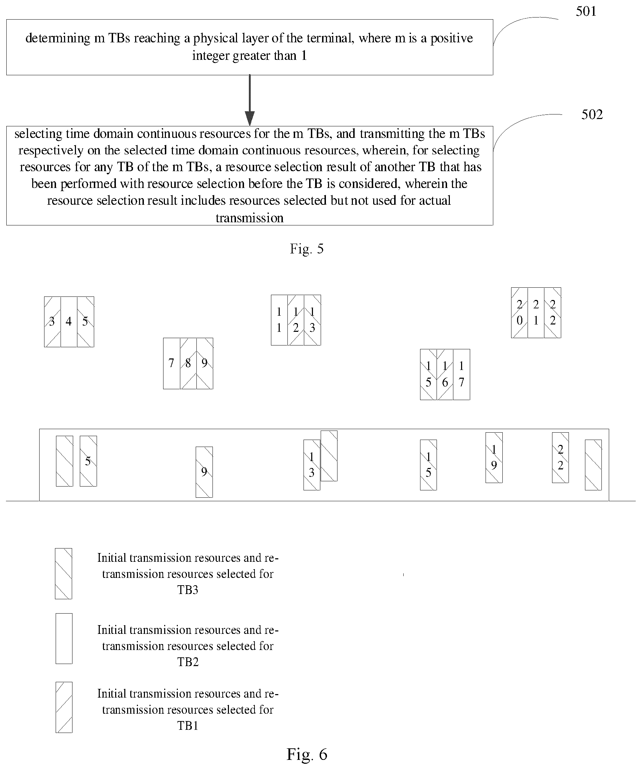

Fig. 5 is a schematic flowchart of a method for continuous multi-slot resource selection provided in an embodiment of the present disclosure. The method is performed by a terminal. As shown in Fig. 5, the method may include the following steps.

Step 501, m TBs reaching a physical layer of the terminal are determined, where m is a positive integer greater than 1.

Step 502, m time domain continuous resources are selected for the m TBs, and the m TBs are continuously transmitted on the selected time domain continuous m resources, wherein, for selecting resources for any TB of the m TBs, resource selection results of one or more TBs that have arrived before the any TB are considered, wherein the resource selection results include resources selected for the one or more TBs but not used for actual transmission.

It should be noted that in an embodiment of the present disclosure, the terminal may be a device that provides voice and/or data connectivity to the user. The terminal can communicate with one or more core networks via RAN (Radio Access Network), and may be an IoT terminal such as a sensor device, a mobile phone (also known as "cellular" phone), and a computer with IoT terminals. For example, it may be a fixed, portable, pocket sized, handheld, computer built-in, or vehicle mounted device, for example, a station (STA), a subscriber unit, a subscriber station, a mobile station, a mobile, a remote station, an access point, a remote terminal, an access terminal, a user terminal, or a user agent. Alternatively, the terminal may also be an unmanned aerial vehicle device. Alternatively, the terminal may also be a vehicle mounted device, such as a wireless communication enabled onboard computer or a wireless terminal connected to an external onboard computer. Alternatively, the terminal may also be a roadside device, such as a street lamp, signal lights, or other roadside devices with wireless communication capabilities.

In an embodiment of the present disclosure, in unlicensed frequency bands, continuous multi-slot transmission can be supported, that is, continuous transmission of multiple TBs in multiple continuous slots can be supported. The disclosed technical solution can be applied to sidelink communication on shared frequency bands.

For example, in an embodiment of the present disclosure, the m TBs require m resources that are continuous in the time domain.

In an embodiment of the present disclosure, selecting m time domain continuous resources for the m TBs includes:
for selecting resources for any TB of the m TBs, obtaining a candidate resource set corresponding to the any TB from the physical layer;
if there is no resource selected for the one or more TBs that have arrived before the any TB but not used for actual transmission, selecting resources for the any TB randomly from the candidate resource set corresponding to the any TB;
if there are resources selected for the one or more TBs that have arrived before the any TB but not used for actual transmission, considering the resources as reference resources, and selecting resources for the any TB based on the reference resources;
determining whether there is any resource in the candidate resource set of the any TB that is located in an adjacent slot to at least one reference resource of the reference resources;
if there is a resource located in an adjacent slot to at least one reference resource of the reference resources, selecting resources located in adjacent slots to the reference resources for the any TB; and
if there is no resource located in an adjacent slot to at least one reference resource of the reference resources, selecting resources for the any TB randomly from the candidate resource set of the any TB.

In an embodiment of the present disclosure, the method further includes:
selecting resources for initial transmission and re-transmission for the any TB in the candidate resource set.

For example, in an embodiment of the present disclosure, in the resources that have been selected by a higher layer for one or more TBs but have not been actually used for transmission, the resources for each TB that has not been used for actual transmission contain resources for the initial transmission and re-transmission for the any TB.

In an embodiment of the present disclosure, each of the selected resources a resource in a single slot.

For example, in an embodiment of the present disclosure, the higher layer performs resource selection for the current TB. When selecting resources for initial transmission and retransmission in the candidate resource set corresponding to the TB, it can be determined whether there is a resource in the candidate resource set of the TB that is located in an adjacent slot to at least one reference resource in the reference resources. If there is a resource located in an adjacent slot to at least one reference resource in the reference resources, the resource located in an adjacent slot to the reference resource is selected for the TB. For example, the slot of the resource selected by the higher layer of the terminal is located in a next slot/or a previous slot of at least one resource selected and not used for actual transmission.

In an embodiment of the present disclosure, any TB of the m TBs is transmitted periodically, and the resources selected but not used for actual transmission of a TB with the same period as the any TB or an integer multiple period of the any TB are selected as the reference resources.

For example, in an embodiment of the present disclosure, when the TB is transmitted periodically and the higher layer performs resource selection for the current TB, the higher layer may prioritize selecting in the candidate resource set corresponding to the TB, resources whose slots are located in the next/previous slot of at least one resource selected and unused for actual transmission, and the TB corresponding to the resource selected and unused for actual transmission has the same period as the current TB or there is an integer multiple relationship between the periods of two TBs.

For example, in an embodiment of the present disclosure, an order from a first TB to an m^{th} TB is an order in which the TBs reaches the physical layer.

In an embodiment of the present disclosure, assuming multiple TBs arrive at the physical layer at different time, the physical layer can be triggered sequentially for resource selection according to the order of time of arrival of the TBs.

For example, in an embodiment of the present disclosure, the physical layer is triggered by the first arriving TB in slot n for resource selection, the physical layer is triggered by the second arriving TB in slot (n+t1) for resource selection,..., and the physical layer is triggered by the xth arriving TB in slot (n+tx) for resource selection.

In an embodiment of the present disclosure, the physical layer can reuse the process of R16, determine the candidate resource set, and send the candidate resource SA corresponding to each TB to the higher layer.

For example, in an embodiment of the present disclosure, the higher layer performs resource selection for each TB in the corresponding candidate resource set according to the sequence of time of arrival of TBs. When the higher layer selects resources for the current TB, it considers the results of resource selection for one or more previous TBs and selects resources that are located in adjacent slots to the resources that have been selected for the one or more previous TBs and not used for actual transmission.

In an embodiment of the present disclosure, the method further includes:
if there are multiple resources in the candidate resource set of the any TB that are located in adjacent slots to multiple reference resources of the reference resources, preferentially selecting resources that can form longer continuous slots with resources in the reference resources as the resources for the any TB.

In an embodiment of the present disclosure, when performing resource selection for the current TB, priority is given to selecting resources that can form longer continuous slots with resources selected and unused for transmission existing in the higher layer.

For example, in an embodiment of the present disclosure, a length m of the continuous slots is less than or equal to a threshold N, and the threshold N is related to a priority of the TB or related to a slot length of a longest channel occupancy time (COT).

In an embodiment of the present disclosure, the threshold N does not specifically refer to a fixed threshold. For example, when the priority of TB changes, the threshold N can also change accordingly. The threshold N can be predefined or preconfigured.

Further, in an embodiment of the present disclosure, the threshold N is equal to a slot length of the longest COT.

For example, in an embodiment of the present disclosure, if the longest COT length is 10ms and 15kHz, and there are 10 slots, then the threshold N=10 and m≤10. For example, if m=3, a maximum of 3 slots of continuous slot length can be selected as resources.

Further, in an embodiment of the present disclosure, the method further includes:
if there are multiple resources in the candidate resource set of the any TB that are located in adjacent slots to multiple reference resources of the reference resources, preferentially selecting resources ranked top in a time domain in the candidate resource set of the any TB as the resources for the any TB.

In an embodiment of the present disclosure, during continuous multi-slot transmission, when the higher layer selects initial and retransmission resources for TB, the selected resources each time need to be located in adjacent slots with the resources that have already been selected for one or more TBs and are not used for actual transmission and are located earlier in the time domain.

For example, in an embodiment of the present disclosure, for example, the resources for the initial transmission and multiple retransmissions of one TB that have been selected but not used for actual transmission in the higher layer are {r1, r2, r3, r4,... rj}. For performing resource selection for the current TB, when the first resource selection is performed, the resource located in the adjacent slot to the r1 resource that is ranked earliest in the resources selected and not used for actual transmission is selected, and when the second resource selection is performed, the resource located in the adjacent slot to the r2 resource that is ranked second earliest in the resources selected and not used for actual transmission is selected, and when the third resource selection is performed, the resource located in the adjacent slot to the r3 resource that is ranked third earliest in the resources selected and not used for actual transmission is selected, ....

Further, in an embodiment of the present disclosure, a time interval between any two resources selected for the same TB is greater than or equal to a minimum time interval Z.

For example, in an embodiment of the present disclosure, in continuous multi-slot transmission, when the higher layer selects initial and retransmission resources for each TB, when Hybrid Automatic Repeat Request Ack (HARQ ACK)/Hybrid Automatic Repeat Request No Acknowledgment (HARQ NACK) is enabled and the resource pool is configured with Physical Sidelink Shared Channel (PSFCH) resources, the time interval between any two resources selected for the same TB needs to be greater than or equal to the minimum time interval Z. The Z value can reuse the value specified by R16 sidelink.

For example, in an embodiment of the present disclosure, there are resources {r1, r2, r3, r4,... rj} that have already been selected for one TB in the higher layer. The higher layer considers that the resource r1, which is ranked earliest in the time domain, is used for the initial transmission of the TB, the resource r2, which is ranked the second earliest in the time domain, is used for the first retransmission of the TB, the resource r3, which is ranked the third earliest in the time domain, is used for the second retransmission of the TB,..., the resource rj is used for the (j-1)th retransmission of the TB. The time interval between resources r1 and r2 is ≥ Z; the time interval between resources r2 and r3 is ≥ Z,..., and the time interval between resources r (j-1) and rj is ≥ Z.

Further, in an embodiment of the present disclosure, the method is performed by the higher layer of the terminal. The higher layer is a layer other than the physical layer and above the physical layer. That is, the higher layer is above the physical layer. For example, the higher layer may be a media access control (MAC) layer.

For example, in an embodiment of the present disclosure, the disclosed technical solution can be applied in multiple scenarios.

Scenario 1: If m TBs are different TBs, then the physical layer generates and reports m candidate resource sets {SA1, SA2,..., SAm} to the higher layer.

With the above method, the higher layer selects resources for initial transmission or retransmission for each TB in the corresponding candidate resource set.

Scenario 2: If m TBs are the same TB, the physical layer generates and reports only one candidate resource set {SA1} to the higher layer.

With the above method, the higher layer selects resources for initial transmission or retransmission for the m TBs in SA1.

Scenario 3: If m TBs are composed of a identical TBs and b different TBs, the physical layer generates and reports to the higher layer (1+b) candidate resource sets {SA1, SA2,..., SAb+1}.

Resources are selected for the a identical TBs from the same candidate resource set, such as SA1, and resources are selected for the b different TBs from their corresponding candidate resource sets. With the above method, the higher layer selects resources for initial transmission or retransmission for each TB.

For example, in an embodiment of the present disclosure, assuming that the high layer parameter MaxTXTransNumPSSCH of each TB is 5, that is, the maximum sum of number of times of initial transmission and retransmissions supported by each TB is 5, the high layer selects 5 resources for initial transmission and retransmissions for each TB, and each resource is a single slot resource, that is, has 1 slot in the time domain. The number of TBs is m=3. The higher layer selects 3 continuous resources in the time domain and sends the corresponding 3 TBs continuously. The 3 TBs are different TBs. The first arriving TB is TB1, and corresponds to the candidate resource set SA1. The second arriving TB is TB2, and corresponds to the candidate resource set SA2. The third arriving TB is TB3, and corresponds to the candidate resource set SA3.

Further, in an embodiment of the present disclosure, Fig. 3 is a schematic diagram of a method for continuous multi-slot resource selection provided in an embodiment of the present disclosure. As shown in Fig. 3, when the higher layer selects resources for TB3, in the resource selection window of TB3, resources located in adjacent slots to those already selected for TB1 and TB2 but not used for actual transmission are selected from the candidate resource set. The number in Fig. 3 is the slot number where the resource is located.

In an embodiment of the present disclosure, the 5 resources that have been selected by the higher layer for TB1 but have not been used for actual transmission are {r1, r2, r3, r4, r5}, and these resources are used as reference resources, where r1 is located in slot 3, r2 is located in slot 8, r3 is located in slot 12, r4 is located in slot 16, and r5 is located in slot 20. When the higher layer selects resources for initial transmission and retransmission for one TB that arrives after TB1, such as TB2, the higher layer selects resources in the candidate resource set SA2 corresponding to TB2 based on the reference resources, and selects resources that are located in adjacent slots to the reference resources. The first selected resource x1 is located in slot 7, which is the previous slot relative to resource r2 of TB1, the second selected resource x2 is located in slot 4, which is the next slot relative to resource r1 of TB1, the third selected resource x3 is located in slot 21, which is the next slot relative to resource r5 of TB1, the fourth selected resource x4 is located in slot 17, which is the next slot relative to resource r4 of TB1, and the fifth selected resource x5 is located in slot 11, which is the next slot relative to resource r3 of TB1. That is, resources {slot4, slot7, slot11, slot17, slot21} are selected for TB2. The resources selected for TB2 are also used as reference resources.

In an embodiment of the present disclosure, When the higher layer selects resources for initial transmission and retransmission for one TB that arrives after TB2, such as TB3, the higher layer selects resources in the candidate resource set SA3 corresponding to TB3 based on the reference resources, and selects resources that are located in adjacent slots to the reference resources. The first selected resource y1 is located in slot 9, which is the next slot relative to resource r2 of TB1, the second selected resource y2 is located in slot 15, which is the previous slot relative to resource r1 of TB1, the third selected resource y3 is located in slot 5, which is the next slot relative to resource x2 of TB2, the fourth selected resource y4 is located in slot 13, which is the next slot relative to resource r3 of TB1, and the fifth selected resource y5 is located in slot 22, which is the next slot relative to resource x3 of TB2. That is, resources {slot5, slot9, slot13, slot15, slot22} are selected for TB3.

As shown in Fig. 6, the resources in the resource selection window of TB3 are the resources in the candidate resource set of TB3, and the resources {slot5, slot9, slot13, slot15, slot22} are the resources selected from the candidate resource set that meet the condition.

For example, in an embodiment of the present disclosure, for example, the high layer parameter MaxTXTransNumPSSCH of each TB is different, and the sum of number of times of the initial transmission and retransmissions selected for each TB is different. For example, the maximum sum of number of times of initial transmission and retransmissions supported by TB3 is 3, the high layer selects 3 resources for initial transmission and retransmissions for TB3, and each resource is a single slot resource, that is, has 1 slot in the time domain. m=3, and the higher layer selects 3 continuous resources in the time domain and sends the corresponding 3 TBs continuously. The 3 TBs are different TBs. The first arriving TB is TB1, and corresponds to the candidate resource set SA1. The second arriving TB is TB2, and corresponds to the candidate resource set SA2. The third arriving TB is TB3, and corresponds to the candidate resource set SA3.

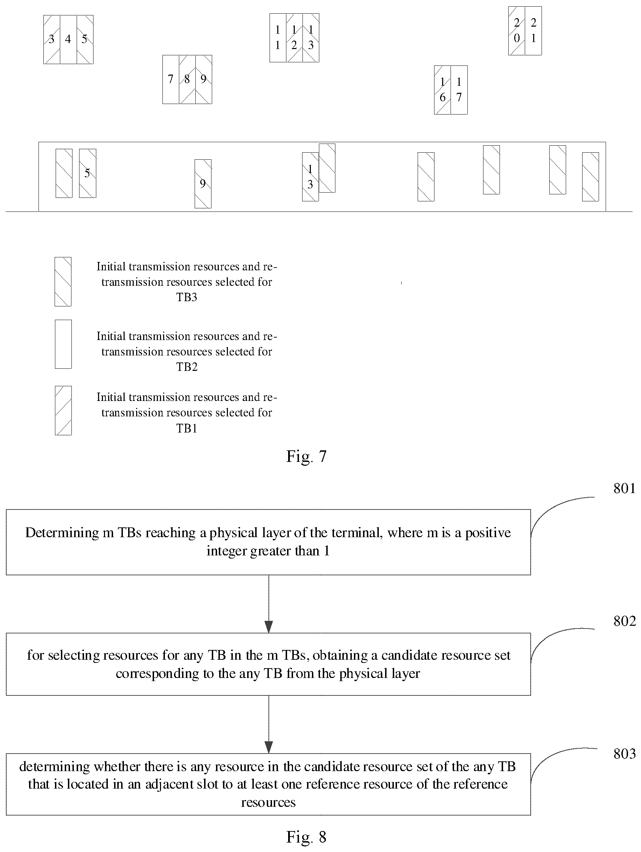

Further, in an embodiment of the present disclosure, Fig. 7 is a schematic diagram of a method for continuous multi-slot resource selection provided in an embodiment of the present disclosure. As shown in Fig. 7, when the higher layer selects resources for TB3, in the resource selection window of TB3, resources located in adjacent slots to those already selected for TB1 and TB2 but not used for actual transmission are selected from the corresponding candidate resource set. The number in Fig. 4 is the slot number where the resource is located.

In an embodiment of the present disclosure, the higher layer has selected 5 resources {r1, r2, r3, r4, r5} for initial transmission and retransmissions of TB1 but these 5 resources have not been used for actual transmission, where r1 is located in slot 3, r2 is located in slot 8, r3 is located in slot 12, r4 is located in slot 16, and r5 is located in slot 20. These resources serve as reference resources.

In an embodiment of the present disclosure, the higher layer selects 5 resources for initial transmission and retransmission for one TB2 that arrives after TB1. In the candidate resource set SA2 corresponding to this TB2, resource selection is performed based on the reference resources, selecting resources located in adjacent slots to the reference resources. The first selected resource x1 is located in slot 7, which is the previous slot relative to resource r2 of TB1, the second selected resource x2 is located in slot 4, which is the next slot relative to resource r1 of TB1, the third selected resource x3 is located in slot 21, which is the next slot relative to resource r5 of TB1, the fourth selected resource x4 is located in slot 17, which is the next slot relative to resource r4 of TB1, and the fifth selected resource x5 is located in slot 11, which is the next slot relative to resource r3 of TB1. That is, resources {slot4, slot7, slot11, slot17, slot21} are selected for TB2. The resources selected for TB2 are also used as reference resources.

In an embodiment of the present disclosure, the higher layer selects three resources for initial transmission and retransmission for one TB3 that arrives after TB2. In the candidate resource set SA3 corresponding to this TB3, resource selection is performed based on the reference resources. Resources located in adjacent slots to the reference resources are selected, and the selected resources could be at least located in adjacent slots to resources ranked earlier in the resources that have been selected for one or more TB and have not been used for actual transmission. That is, resources located in adjacent slots to slot 3, slot 4, slot 7, slot 8, slot 11, and slot 12 are selected as much as possible. Therefore, the first selected resource y1 is located in slot 9, which is the next slot relative to resource r2 of TB1, the second selected resource y1 is located in slot 5, which is the next slot relative to resource x2 of TB2, and the third selected resource y3 is located in slot 13, which is the next slot relative to resource r3 of TB1, that is, resources {slot 5, slot 9, slot 13} are selected for TB3.

As shown in Fig. 7, the resources in the resource selection window of TB3 are the resources in the candidate resource set of TB3, and the resources in {slot5, slot9, slot13,} are the resources selected from the candidate resource set that meet the condition.

In summary, in embodiments of the present disclosure, m TBs reaching the physical layer of the terminal are determined, where m is a positive integer greater than 1; m time domain continuous resources are selected for the m TBs, and the m TBs are continuously transmitted on the selected time domain continuous m resources. When selecting resources for any TB of the m TBs, the resource selection results of one or more TBs that arrived before that TB are considered. The resource selection results include the resources selected for the one or more TBs but not used for actual transmission. In embodiments of the present disclosure, a continuous multi-slot resource selection mechanism is provided to reduce the situation where selection of multiple time domain continuous resources cannot be made, which can improve the convenience of selecting resources in multiple continuous slots. This disclosure provides a processing method for a situation of "continuous multi-slot resource selection". Based on m TBs arriving at the physical layer of the terminal, a method is used to select for any TB in the m TBs, resources located in adjacent slots to the resources selected for one or more TB that have arrived before the any TB but not used for actual transmission. The method determines m resources that are continuous in the time domain, thereby achieving continuous multi-slot resource selection, reducing the impact of LBT failure, and improving channel access efficiency.

Fig. 8 is a schematic flowchart of a method for continuous multi-slot resource selection provided in an embodiment of the present disclosure. The method is performed by a terminal, and as shown in Fig. 8, the method may include the following steps.

Step 801, m TBs reaching a physical layer of the terminal are determined, where m is a positive integer greater than 1.

Step 802, for selecting resources for any TB in the m TBs, a candidate resource set corresponding to the any TB is obtained from the physical layer.

If there is no resource selected for one or more TBs that have arrived before the any TB but not used for actual transmission, resources are selected for the any TB randomly from the candidate resource set corresponding to the any TB.

If there are resources selected for the one or more TBs that have arrived before the any TB but not used for actual transmission, these resources are used as reference resources, and resources are selected for the any TB based on the reference resources.

Step 803, it is determined whether there is any resource in the candidate resource set of the any TB that is located in an adjacent slot to at least one reference resource of the reference resources.

If there is a resource located in an adjacent slot to at least one reference resource of the reference resources, resources located in adjacent slots to the reference resources are selected for the any TB.

If there is no resource located in an adjacent slot to at least one reference resource of the reference resources, resources are selected for the any TB randomly from the candidate resource set of the any TB.

In an embodiment of the present disclosure, resources for initial transmission and re-transmission of the TBs are selected in each candidate resource set.

In an embodiment of the present disclosure, the resources selected for one or more TBs that arrive before the any TB and not used for actual transmission are resources in the adjacent slots.

In an embodiment of the present disclosure, each of resources selected is a resource in a single slot.

In an embodiment of the present disclosure, any TB of the m TBs is transmitted periodically, and the resources selected but not used for actual transmission of a TB with the same period as the any TB or an integer multiple period of the any TB are selected as the reference resources.

In an embodiment of the present disclosure, an order from a first TB to an m^{th} TB is an order in which the TBs reaches the physical layer.

In an embodiment of the present disclosure, a time interval between any two resources selected for the same TB is greater than or equal to a minimum time interval Z.

For example, in an embodiment of the present disclosure, in continuous multi-slot transmission, when the higher layer selects initial and retransmission resources for each TB, when HARQ ACK/ HARQ NACK is enabled and the resource pool is configured with PSFCH resources, the time interval between any two resources selected for the same TB needs to be greater than or equal to the minimum time interval Z. The Z value can reuse the value specified by R16 sidelink.

For example, in an embodiment of the present disclosure, there are resources {r1, r2, r3, r4,... rj} that have already been selected for one TB in the higher layer. The higher layer considers that the resource r1, which is ranked earliest in the time domain, is used for the initial transmission of the TB, the resource r2, which is ranked the second earliest in the time domain, is used for the first retransmission of the TB, the resource r3, which is ranked the third earliest in the time domain, is used for the second retransmission of the TB,..., the resource rj is used for the (j-1)th retransmission of the TB. The time interval between resources r1 and r2 is ≥ Z; the time interval between resources r2 and r3 is ≥ Z,..., and the time interval between resources r (j-1) and rj is ≥ Z.

Further, in an embodiment of the present disclosure, the method is performed by a higher layer of the terminal, and the higher layer is a layer other than the physical layer and above the physical layer. That is, the higher layer is above the physical layer. For example, the higher layer may be the MAC layer.

In summary, in embodiments of the present disclosure, m TBs reaching the physical layer of the terminal are determined, where m is a positive integer greater than 1; m time domain continuous resources are selected for the m TBs, and the m TBs are continuously transmitted on the selected time domain continuous m resources. When selecting resources for any TB of the m TBs, the resource selection results of one or more TBs that arrived before that TB are considered. The resource selection results include the resources selected for the one or more TBs but not used for actual transmission. In embodiments of the present disclosure, a continuous multi-slot resource selection mechanism is provided to reduce the situation where selection of multiple time domain continuous resources cannot be made, which can improve the convenience of selecting resources in multiple continuous slots. This disclosure provides a processing method for a situation of "continuous multi-slot resource selection". Based on m TBs arriving at the physical layer of the terminal, a method is used to select for any TB in the m TBs, resources located in adjacent slots to the resources selected for one or more TB that have arrived before the any TB but not used for actual transmission. The method determines m resources that are continuous in the time domain, thereby achieving continuous multi-slot resource selection, reducing the impact of LBT failure, and improving channel access efficiency.

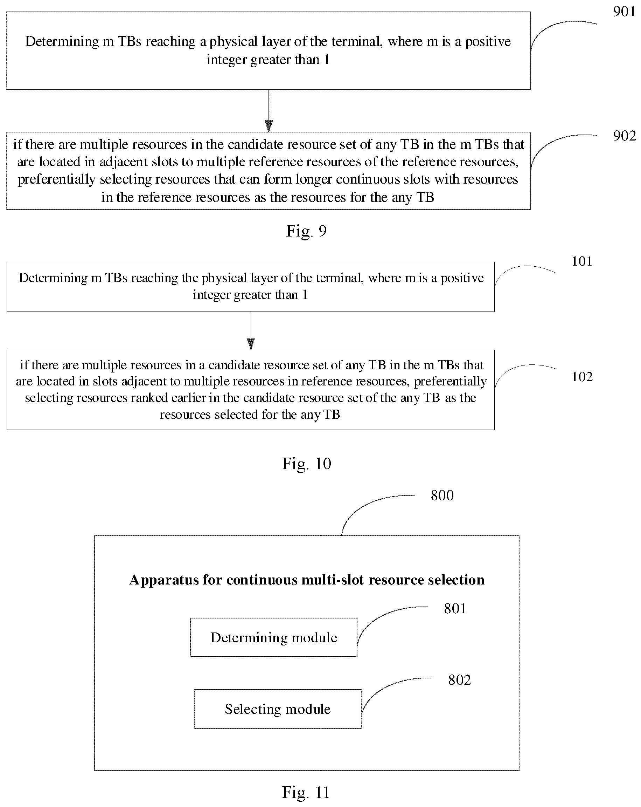

Fig. 9 is a schematic flowchart of a method for continuous multi-slot resource selection provided in an embodiment of the present disclosure. The method is performed by a terminal, and as shown in Fig. 9, the method may include the following steps.

Step 901, m TBs reaching a physical layer of the terminal are determined, where m is a positive integer greater than 1.

Step S902, if there are multiple resources in the candidate resource set of any TB in the m TBs that are located in adjacent slots to multiple reference resources of the reference resources, resources that can form longer continuous slots with resources in the reference resources are preferentially selected as the resources for the any TB.

In an embodiment of the present disclosure, the threshold N is equal to the slot length of the longest COT.

In an embodiment of the present disclosure, the threshold N does not specifically refer to a fixed threshold. For example, when the priority of TB changes, the threshold N can also change accordingly. The threshold N can be predefined or preconfigured.

Further, in an embodiment of the present disclosure, the threshold N is equal to a slot length of the longest COT.

For example, in an embodiment of the present disclosure, if the longest COT length is 10ms and 15kHz, and there are 10 slots, then the threshold N=10 and m≤10. For example, if m=3, a maximum of 3 slots of continuous slot length can be selected as resources.

In an embodiment of the present disclosure, the method is performed by the higher layer of the terminal. The higher layer is a layer other than the physical layer and above the physical layer. That is, the higher layer is above the physical layer. For example, the higher layer may be the MAC layer.

In summary, in embodiments of the present disclosure, m TBs reaching the physical layer of the terminal are determined, where m is a positive integer greater than 1. If there are multiple resources in the candidate resource set of the TB that are adjacent to multiple reference resources in the reference resources, the resources that can form a longer continuous slot with the resources in the reference resources are preferentially selected as the resources for the TB. In embodiments of the present disclosure, a continuous multi-slot resource selection mechanism is provided to reduce the situation where selection of multiple time domain continuous resources cannot be made, which can improve the convenience of selecting resources in multiple continuous slots. Embodiments of the present disclosure, for example, disclose a scheme of preferentially selecting resources that can form longer continuous slots with resources from the reference resources as the resources for the TB. This disclosure provides a processing method for a situation of "continuous multi-slot resource selection", which performs continuous multi-slot resource selection, determines m continuous resources in the time domain, thereby achieving continuous multi-slot resource selection, reducing the impact of LBT failure, and improving channel access efficiency.

Fig. 10 is a schematic flowchart of a method for continuous multi-slot resource selection provided in an embodiment of the present disclosure. The method is performed by a terminal. As shown in Fig. 10, the method may include the following steps.

Step 101, m TBs reaching the physical layer of the terminal are determined, where m is a positive integer greater than 1.

Step 102, if there are multiple resources in a candidate resource set of any TB in the m TBs that are located in slots adjacent to multiple resources in reference resources, resources ranked earlier in the candidate resource set of the any TB are selected preferentially as the resources selected for the any TB.

In an embodiment of the present disclosure, the method is performed by the higher layer of the terminal. The higher layer is a layer other than the physical layer and above the physical layer. That is, the higher layer is above the physical layer. For example, the higher layer may be the MAC layer.

In an embodiment of the present disclosure, during the continuous multi-slot transmission, when the higher layer selects initial transmission resources and retransmission resources for the TB, the selected resources each time need to be located in slots adjacent to the resources that have already been selected for one or more TBs and are not used for actual transmission, and are earlier in the time domain.

For example, in an embodiment of the present disclosure, for example, the resources for the initial transmission and multiple retransmissions of one TB that have been selected but not used for actual transmission in the higher layer are {r1, r2, r3, r4,... rj}. For performing resource selection for the current TB, when the first resource selection is performed, the resource located in the adjacent slot to the r1 resource that is ranked earliest in the resources selected and not used for actual transmission is selected, and when the second resource selection is performed, the resource located in the adjacent slot to the r2 resource that is ranked second earliest in the resources selected and not used for actual transmission is selected, and when the third resource selection is performed, the resource located in the adjacent slot to the r3 resource that is ranked third earliest in the resources selected and not used for actual transmission is selected, ....

In summary, in embodiments of the present disclosure, m TBs reaching the physical layer of the terminal are determined, where m is a positive integer greater than 1. If there are multiple resources in the candidate resource set of the TB that are located in slots adjacent to multiple resources in the reference resources, the resources ranked earlier in the time domain in the candidate resource set of the TB are preferentially selected as the resources for the TB. In embodiments of the present disclosure, a continuous multi-slot resource selection mechanism is provided to reduce the impact of LBT failure, and improve the channel access efficiency. Embodiments of the present disclosure specifically disclose a scheme of preferentially selecting resources ranked earlier in the time domain from the candidate resource stet of the TB as the resources for the TB. This disclosure provides a processing method for a situation of "continuous multi-slot resource selection", which can perform continuous multi slot resource selection based on m TBs arriving at the physical layer of the terminal, determine m continuous resources in the time domain, reduce the impact of LBT failure, and improve the efficiency of channel access.

Fig. 11 is a block diagram of an apparatus for continuous multi-slot resource selection provided in an embodiment of the present disclosure. As shown in Fig. 11, the apparatus is applied to Sidelink communication on shared frequency bands. The apparatus is arranged on a terminal side, and the apparatus 800 may include a determining module 801 and a selecting module 802.

The determining module 801 is configured to determine m transport blocks (TBs) that reach a physical layer of the terminal, where m is a positive integer greater than 1.

The selecting module 802 is configured to select time domain continuous resources for the m TBs, and respectively transmit the m TBs on the selected time domain continuous resources, wherein, for selecting resources for any TB of the m TBs, a resource selection result of another TB that has been performed with resource selection before the TB is considered, wherein the resource selection result includes resources selected but not used for actual transmission.

Optionally, in an embodiment of the present disclosure, the selecting module 802 is further configured to, when selecting time domain continuous resources for the m TBs: for selecting resources for any TB of the m TBs, obtain a candidate resource set corresponding to the TB from the physical layer; if there is no resource selected but not used for actual transmission for the other TB that has been performed with resource selection before the TB, select resources for the TB randomly from the candidate resource set corresponding to the TB; if there are resources selected but not used for actual transmission for the other TB that has been performed with resource selection before the TB, determine the resources as reference resources, and selecting resources for the TB based on the reference resources.

Optionally, in an embodiment of the present disclosure, the selecting module 802 is further configured to: determine whether there is any resource in the candidate resource set of the TB that is located in a slot adjacent to the reference resource; if there is a resource located in a slot adjacent to the reference resource, select the resources located in the slots adjacent to the reference resources for the TB; and if there is no resource located in a slot adjacent to the reference resource, select resources for the TB randomly from the candidate resource set of the TB.

Optionally, in an embodiment of the present disclosure, the selecting module 802 is further configured to select resources for initial transmission and retransmission of the TB in each candidate resource set.

Optionally, in an embodiment of the present disclosure, certain resources selected for the other TB that has been performed with resource selection before the TB, and resources located in same slots with the certain resources are excluded from the candidate resource set corresponding to the TB.

Optionally, in an embodiment of the present disclosure, the selecting module 802 is further configured to not select any resource located in the same slot with a certain resource selected for the other TB that has been performed with resource selection before the TB, from the candidate resource set corresponding to the TB.

Optionally, in an embodiment of the present disclosure, the certain resources include initial transmission resources and/or re-transmission resources.

Optionally, in an embodiment of the present disclosure, the selecting module 802 is further configured to select initial transmission resources and/or re-transmission resources for the TB from the candidate resource set of the TB.

Optionally, in an embodiment of the present disclosure, the resources selected but not used for actual transmission include initial transmission resources selected but not used for actual transmission, and/or re-transmission resources selected but not used for actual transmission.

Optionally, in an embodiment of the present disclosure, each of resources selected is a resource in a single slot.

Optionally, in an embodiment of the present disclosure, the selecting module 802 is further configured to:
in a case that the TB is transmitted periodically, select the resources selected but not used for actual transmission for another TB, that has been performed with resource selection and has the same period as the TB or an integer multiple period of the TB, as the reference resources.

Optionally, in an embodiment of the present disclosure, an order from a first TB to an m^{th} TB is an order in which the TBs reaches the physical layer.

Optionally, in an embodiment of the present disclosure, the selecting module 802 is further configured to, if there are multiple resources in the candidate resource set of the TB that are located in slots adjacent to the reference resources, preferentially select resources that can form longer continuous slots with the reference resources as the resources for the TB.

Optionally, in an embodiment of the present disclosure, a length of the time domain continuous slots selected for the m TBs is less than or equal to a threshold N, and the threshold N is related to a priority of a TB or related to a slot length of a longest channel occupancy time (COT).

Optionally, in an embodiment of the present disclosure, the threshold N is equal to the slot length of the longest COT.

Optionally, in an embodiment of the present disclosure, the selecting module 802 is further configured to:
if there are multiple resources in the candidate resource set of the TB that are located in slots adjacent to the reference resources, preferentially select resources ranked earlier in a time domain in the candidate resource set of the TB as the resources for the TB.

Optionally, in an embodiment of the present disclosure, a time interval between any two resources selected for the same TB is greater than or equal to a minimum time interval Z.

Optionally, in an embodiment of the present disclosure, the apparatus is arranged in a higher layer of the terminal, and the higher layer is a layer other than the physical layer and above the physical layer.

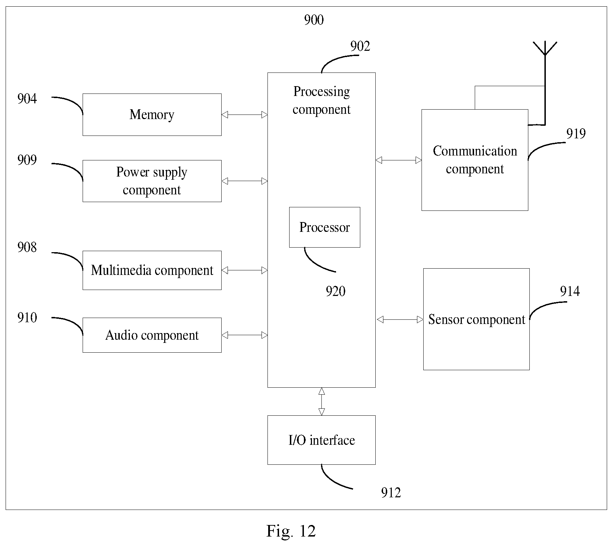

Fig. 12 is a block diagram of a terminal UE 900 provided in an embodiment of the present disclosure. For example, the UE 900 may be a mobile phone, a computer, a digital broadcast terminal device, a message transceiver device, a game console, a tablet device, a medical device, a fitness device, a personal digital assistant, or the like.

Referring to FIG. 12, the UE 900 may include one or more of the following components: a processing component 902, a memory 904, a power supply component 906, a multimedia component 908, an audio component 910, an input/output (I/O) interface 912, a sensor component 914, and a communication component 916.

The processing component 902 typically controls overall operations of the UE 900, such as the operations associated with display, telephone calls, data communications, camera operations, and recording operations. The processing component 902 may include one or more processors 920 to execute instructions to complete all or part of the steps in the above methods. Moreover, the processing component 902 may include at least one module which facilitates the interaction between the processing component 902 and other components. For instance, the processing component 902 may include a multimedia module to facilitate the interaction between the multimedia component 908 and the processing component 902.

The memory 904 is configured to store various types of data to support operations in the UE 900. Examples of such data include instructions for any applications or methods operated on the UE 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 906 provides power to various components of the UE 900. The power supply component 906 may include a power management system, one or more power sources, and any other components associated with the generation, management, and distribution of power in the UE 900.

The multimedia component 908 includes a screen providing an output interface between the UE 900 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 908 includes a front camera and/or a rear camera. The front camera and/or the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) that is configured to receive external audio signals when the UE 900 is in operating modes such as Call Mode, Record Mode, and Speech Recognition Mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the UE 900. For instance, the sensor component 914 may detect an open/closed status of the device 900, relative positioning of components, e.g., a display and a keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate wired or wireless communication between the UE 900 and other devices. The UE 900 may access a wireless network based on a communication standard, such as WiFi, 2G, or 3G, or a combination thereof. In an exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures and software modules, which can be implemented in the form of hardware structures, software modules, or a combination of hardware structures and software modules. One of the above functions can be executed in the form of hardware structure, software module, or a combination of hardware structure and software module.

In the above embodiments provided in this disclosure, the methods provided in this disclosure are introduced from the perspectives of network side device and UE, respectively. In order to achieve the various functions in the methods provided in the embodiments of the present disclosure, the network side device and UE may include hardware structures and software modules, which can be implemented in the form of hardware structures, software modules, or a combination of hardware structures and software modules. One of the above functions can be executed in the form of hardware structure, software module, or a combination of hardware structure and software module.

An embodiment of the present disclosure provides a communication device. The communication device may include a transceiving module and a processing module. The transceiving module may include a sending module and/or a receiving module. The sending module is configured to implement a sending function. The receiving module is configured to implement a receiving function. The transceiving module can implement both the sending function and/or the receiving function.

The communication device may be a terminal (e.g., the terminal in the above method embodiments), or an apparatus in the terminal, or an apparatus capable of matching the terminal. Alternatively, the communication device may be a network device, or an apparatus in the network device, or an apparatus capable of matching the network device.

An embodiment of the present disclosure provides another communication device. The communication device may be a network device; or a terminal (e.g., the terminal in the above method embodiments); or a chip, a chip system, or a processor, etc., that supports the network device to implement the above methods; or a chip, a chip system, or a processor, etc., that supports the terminal to implement the above methods. The apparatus may be configured to implement the methods described in the above method embodiments, and details may refer to the description in the above method embodiments.

The communication device may include one or more processors. The processor may be a general-purpose processor or a special-purpose processor, etc. For example, the processor may be a baseband processor or a central processor. The baseband processor may be configured to process a communication protocol and communication data. The central processor may be configured to control the communication device (e.g., a network side device, a baseband chip, a terminal, a terminal device chip, DU or CU) to execute a computer program and process computer program data.

Optionally, the communication device may also include one or more memories having a computer program stored thereon. The processor executes the computer program, so that the communication device performs the methods described in the above method embodiments. Optionally, data may also be stored in the memory. The communication device and the memory may be arranged separately or integrated together.

Optionally, the communication device may further include a transceiver and an antenna. The transceiver may be referred to as a transceiving unit, a transceiving machine, or a transceiving circuit, etc., which are configured to implement a transceiving function. The transceiver may include a receiver and a sender. The receiver may be referred to as a receiving machine or a receiving circuit, etc., which are configured to implement a receiving function. The sender may be referred to as a sending machine or a sending circuit, etc., which are configured to implement a sending function.

Optionally, the communication device may include one or more interface circuits. The interface circuit is configured to receive code instructions and transmit the code instructions to the processor. The processor is configured to run the code instructions, such that the communication device performs the methods described in the above method embodiments.

The communication device is a terminal (e.g., the terminal in the above method embodiments): the processor is configured to perform any of the methods shown in Figs. 2-7.

In one implementation, the processor may include a transceiver for implementing both a receiving function and a sending function. For example, the transceiver may be a transceiving circuit, or an interface, or an interface circuit. The transceiving circuit, the interface or the interface circuit which is configured to implement both the receiving function and the sending function may be arranged separately or integrated together. The transceiving circuit, the interface or the interface circuit may be configured to read and write codes/data, or may be configured to transmit or transfer a signal.

In one implementation, the processor may be configured to store a computer program therein, the computer program running on the processor to cause the communication device to perform the methods described in the above method embodiments. The computer program may be solidified in the processor, in which case the processor may be implemented by hardware.

In one implementation, the communication device may include a circuit that can implement a sending or receiving or communicating function in the above method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using a variety of IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) or gallium arsenide (GaAs).

The communication device described in the above embodiments may be a network device or a terminal (e.g., the terminal device in the above method embodiments), but the scope of the communication device described in the present disclosure is not limited thereto. The structure of the communication device may not be restricted. The communication device may be a stand-alone device or part of a larger device. For example, the communication device may be:
(1) a stand-alone integrated circuit IC, or chip, a chip system or a subsystem;
(2) a set with one or more ICs, and optionally, the IC set may also include a storage part for storing data and computer programs;
(3) ASIC, such as a modem;
(4) a module that may be embedded in other devices;
(5) a receiver, a terminal device, an intelligent terminal device, a cellular phone, a wireless device, a handset, a mobile unit, a vehicular device, a network device, a cloud device, an artificial intelligence device, etc.; and
(6) Others.

In the case where the communication device may be a chip or a chip system, the chip including a processor and an interface. The number of the processors may be one or more, and the number of interfaces may be multiple.

Optionally, the chip further includes a memory, the memory being configured to have stored necessary computer programs and data therein.

Those skilled in the art may also understand that various illustrative logical blocks and steps listed in the embodiments of the present disclosure may be implemented by electronic hardware, computer software, or a combination thereof. Such function being implemented in hardware or software depends on specific applications and design requirements of the entire system. Those skilled in the art may use various methods for each particular application to achieve the described functions, but such implementation should not be considered beyond the protection scope of the embodiments of the present application.

The present disclosure further provides a readable storage medium configured to have stored instructions therein, the instructions, when executed by a computer, being configured to implement the functions in any of the above method embodiments.

The present disclosure further provides a computer program product configured to be executed by a computer to implement the functions in any of the above methods.

In the above embodiments, the functions may be entirely or partially implemented by software, hardware, firmware or any combination thereof. The functions may be entirely or partially implemented in the form of a computer program product while being implemented by software. The computer program product includes one or more computer programs. When the computer program is loaded and executed on a computer, a flow or function described in the embodiments of the present disclosure is generated entirely or partially. The computer may be a general-purpose computer, a special-purpose computer, a computer network, or other programmable apparatus. The computer program may be stored in a computer-readable storage medium, or transmitted from one computer-readable storage medium to another computer-readable storage medium. For example, the computer program may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The computer-readable storage medium may be any available medium that can be accessed by the computer or a data storage device such as a server or a data center, which is integrated with one or more available media. The available medium may be a magnetic medium (e.g., a floppy disk, a hard disk or a magnetic tape), an optical medium (e.g., a high-density digital video disc (DVD)), or a semiconductor medium (e.g., a solid state disk (SSD)).

A person of ordinary skill in the art may understand that "first", "second" and other numerical symbols involved in the present disclosure are distinguished only for the convenience of description, and are not used to limit the scope of the embodiments of the present disclosure, and also indicate a sequential order.

"At least one" in the present disclosure may also be described as one or more, and "the plurality of" may be two, three, four, or more, without limitation in the present disclosure. In the embodiments of the present disclosure, for a technical feature, the technical features for this technical feature are distinguished by the terms "first", "second", "third", "A", "B", "C" and "D", etc., and the technical features described by "first", "second", "third", "A", "B", "C" and "D" are not in a chronological order or in a magnitude order.

Other embodiments of the present invention will be apparent to those skilled in the art from consideration of the specification and to practice the present invention herein. The present disclosure is intended to cover any variations, uses, or adaptations of the present invention, following the general principles thereof and including common knowledge or commonly used technical measures which are not disclosed herein. The specification and embodiments are to be considered as exemplary only, and the true scope and spirit of the present disclosure are indicated by the following claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for continuous multi-slot resource selection, applied to sidelink communication on a shared frequency band, the method being performed by a terminal, and comprising:
determining m transport blocks (TBs) that reach a physical layer of the terminal, where m is a positive integer greater than 1; and
selecting time domain continuous resources for the m TBs, and respectively transmitting the m TBs on the selected time domain continuous resources, wherein, for selecting resources for any TB of the m TBs, a resource selection result of another TB that has been performed with resource selection before the TB is considered, wherein the resource selection result comprises resources selected but not used for actual transmission.

2. The method of claim 1, wherein selecting time domain continuous resources for the m TBs comprises:
for selecting resources for any TB of the m TBs, obtaining a candidate resource set corresponding to the TB from the physical layer;
if there is no resource selected but not used for actual transmission for the other TB that has been performed with resource selection before the TB, selecting resources for the TB randomly from the candidate resource set corresponding to the TB;
if there are resources selected but not used for actual transmission for the other TB that has been performed with resource selection before the TB, determining the resources as reference resources, and selecting resources for the TB based on the reference resources.

3. The method of claim 2, wherein selecting resources for the TB based on the reference resources comprises:
determining whether there is any resource in the candidate resource set of the TB that is located in a slot adjacent to the reference resource;
if there is a resource located in a slot adjacent to the reference resource, selecting the resources located in the slots adjacent to the reference resources for the TB; and
if there is no resource located in a slot adjacent to the reference resource, selecting resources for the TB randomly from the candidate resource set of the TB.

4. The method of claim 2 or 3, wherein certain resources selected for the other TB that has been performed with resource selection before the TB, and resources located in same slots with the certain resources are excluded from the candidate resource set corresponding to the TB.

5. The method of claim 2 or 3, further comprising:
not selecting any resource located in the same slot with a certain resource selected for the other TB that has been performed with resource selection before the TB, from the candidate resource set corresponding to the TB.

6. The method of claim 4 or 5, wherein the certain resources comprise initial transmission resources and/or re-transmission resources.

7. The method of any of claims 2 to 6, wherein selecting resources for the TB from the candidate resource set of the TB comprises:
selecting initial transmission resources and/or re-transmission resources for the TB from the candidate resource set of the TB.

8. The method of any of claims 1 to 7, wherein the resources selected but not used for actual transmission comprise: initial transmission resources selected but not used for actual transmission, and/or re-transmission resources selected but not used for actual transmission.

9. The method of any of claims 1 to 8, wherein each of resources selected is a resource in a single slot.

10. The method of any of claims 2 to 9, wherein if there are resources selected but not used for actual transmission for the other TB that has been performed with resource selection before the TB, determining the resources as reference resources, comprises:
in a case that the TB is transmitted periodically, selecting the resources selected but not used for actual transmission for another TB, that has been performed with resource selection and has the same period as the TB or an integer multiple period of the TB, as the reference resources.

11. The method of any of claims 1 to 10, wherein an order from a first TB to an m^{th} TB is an order in which the TBs reaches the physical layer.

12. The method of any of claims 3 to 11, wherein if there is a resource located in a slot adjacent to the reference resources, selecting the resources located in the slots adjacent to the reference resources for the TB, comprises:
if there are multiple resources in the candidate resource set of the TB that are located in slots adjacent to the reference resources, preferentially selecting resources that can form longer continuous slots with the reference resources as the resources for the TB; or
if there are multiple resources in the candidate resource set of the TB that are located in slots adjacent to the reference resources, preferentially selecting resources ranked earlier in a time domain in the candidate resource set of the TB as the resources for the TB.

13. The method of any of claims 1 to 12, wherein a length of the time domain continuous slots selected for the m TBs is less than or equal to a threshold N, and the threshold N is related to a priority of a TB or related to a slot length of a longest channel occupancy time (COT).

14. The method of claim 13, wherein the threshold N is equal to the slot length of the longest COT.

15. The method of any of claims 1 to 14, wherein a time interval between any two resources selected for the same TB is greater than or equal to a minimum time interval Z.

16. The method of any of claims 1 to 15, wherein the method is performed by a higher layer of the terminal, and the higher layer is a layer other than the physical layer and above the physical layer.

17. An apparatus for continuous multi-slot resource selection, applied to sidelink communication on a shared frequency band, the apparatus being arranged on a terminal side and comprising:
a determining module, configured to determine m transport blocks (TBs) that reach a physical layer of the terminal, where m is a positive integer greater than 1;
a selecting module, configured to select time domain continuous resources for the m TBs, and respectively transmit the m TBs on the selected time domain continuous resources, wherein, for selecting resources for any TB of the m TBs, a resource selection result of another TB that has been performed with resource selection before the TB is considered, wherein the resource selection result comprises resources selected but not used for actual transmission.

18. A terminal, comprising a processor and a memory, wherein the memory stores a computer program, which, when executed by the processor, cause the device to implement the method according to any one of claims 1 to 16.

19. A communication device, comprising a processor and an interface circuit;
wherein the interface circuit is configured to receive code instructions and transmit the code instructions to the processor; and
the processor is configured to execute the code instructions to implement the method according to any one of claims 1 to 16.

20. A computer-readable storage medium, configured to store instructions,
wherein when the instructions are executed, the method of any one of claims 1 to 16 is implemented.
